# EUROPEAN PATENT APPLICATION

(11) **EP 2 014 348 A2**
(43) Date of publication of application: **14.01.2009**
(21) Application number: 08102482.0
(22) Date of filing: 11.03.2008
(51) Int. Cl.: B01D 53/94, F01N 3/023, F01N 3/035, F01N 3/20

(54) **A method and a system for a treatment of a NOx- and soot-containing exhaust gas**

(30) Priority: 22.06.2007 EP 07012290
(71) Applicant: Paul Scherrer Institut, 5232 Villigen (CH)
(72) Inventor: Kröcher, Oliver, 5313, Klingnau (CH); Elsener, Martin, 5313, Klingnau (CH)
(74) Representative: Fischer, Michael

(57) **Abstract**

It is the aim of the present invention to provide a method and a system for the treatment of a NOₓ- and soot-containing exhaust gas stemming from an internal combustion engine that combines soot filtration/deposition and selective catalytic reduction of NOₓ in a new way to foster the overall system efficiency and to reduce system size and weight.

This aim is achieved according to the present invention by a method and a system for a treatment of a NOₓ- and soot-containing exhaust gas stemming from an internal combustion engine (4); comprising the steps of:
a) providing NO₂ in the NOₓ- and soot-containing exhaust gas by an internal combustion measure and/or by bringing at least a part of the NOₓ- and soot-containing exhaust gas into contact with an oxidation catalyst (6);
b) injecting at least into a part of the NOₓ- and soot-containing exhaust gas a predetermined amount of ammonia, either as neat ammonia or as a precursor compound for ammonia, such as urea, a liquid solution of urea, ammonium carbamate, isocyanic acid, cyanuric acid, methanamide, etc. or combinations of them, downstream and/or parallel to the controlling of the amount of the NO₂ as seen in the flow direction of the NOₓ- and soot-containing exhaust gas;
c) bringing the ammonia-enriched NOₓ- and soot-containing exhaust gas into contact with a support structure (16) filtering and thereby depositing soot particles (14) from the NOₓ- and soot-containing exhaust gas on its surface thereby initiating a selective catalytic reduction of at least a part of the NOₓ-molecules with ammonia to nitrogen and water.

## Description

The present invention relates to a method and a system for a treatment of a NOₓ- and soot-containing exhaust gas stemming from an internal combustion engine.

In order to meet future emission limits of diesel engines, their NOₓ and soot emissions have to be reduced. This goal may be approached by internal measures to reduce the raw emissions of the engines. However, according to the actual state of knowledge exhaust gas after-treatment technology is unavoidable to meet the emission limits.

Exhaust gas after-treatment systems for the removal of soot use either filters or soot deposition devices. Among the soot deposition devices special metal honeycombs have been proven to be especially suitable, in which the channels are not smooth but structured (such WO 2001/0180978A1). This initiates areas of swirl and stabilization, which allows for efficient particle deposition.
The deposited soot has to be removed from all filters and deposition devices, in order to avoid blockage of the system and to keep the deposition efficiency high. The removal of soot particles is called "regeneration", which can be carried out in an uncontinuous or continuous way. For the uncontinuous regeneration the temperature of exhaust gas has to be elevated to initiate the exothermic oxidation of the soot. This results in exhaust gas temperatures of up to 650 °C during regeneration downstream of the filter/deposition device. Since this regeneration cannot be reliably controlled even much higher temperatures have been observed downstream of the filter/deposition device. For the continuous regeneration, NO₂ is usually applied for soot oxidation, whereby the NO₂ is produced from NO in an oxidation catalyst upstream of the filter/ deposition device.

For the NOₓ reduction in lean combustion engines (most notably diesel engines and lean-burning gasoline engines) in heavy-duty vehicles, light-duty vehicles and recently even passenger cars, selective catalytic reduction (SCR) establishs itself, in which a (reductant) additive reacts with NOₓ on a catalyst to nitrogen. The most common reductants are ammonia gas and urea solution, but many other reductants in gaseous, liquid or solid form have also been successfully applied for SCR, such as solid or molten urea, ammonium carbamate, isocyanic acid, cyanuric acid, methanamide, etc. The reductant is added to a stream of flue or exhaust gas, where it is either completely decomposed/hydrolyzed to ammonia or decomposed/hydrolyzed to an intermediate, which acts as an ammonia precursor, or the reductant reaches the catalyst unchanged. Ammonia, the decomposition intermediate or the reductant absorbs onto a catalyst, where it reacts with NOₓ in the exhaust gas to form harmless H₂O (water vapour) and N₂ (nitrogen gas).
The actual reactions on the catalysts are:
a) 4 NH₃ + 4 NO + O₂ → 4 N₂ + 6 H₂O
   In this "standard-SCR" reaction NH₃ and NO are consumed in a 1:1 stoichiometry beside oxygen, which is necessary to reoxidize the catalyst in the catalytic cycle.
b) 4 NH₃ + 2 NO + 2 NO₂ → 4 N₂ + 6 H₂O
   When equimolar amounts of NO and NO₂ are used a much higher reaction rate is observed ("fast-SCR" reaction).
c) 4 NH₃ + 3 NO₂ → 3½ N₂ + 6 H₂O
   There is also an SCR reaction with pure NO₂ ("NO₂-SCR").

So far as known in the prior art (such as WO 2001/0180978A1), special catalytic converters are required to make an SCR system work, the current options being, for example, a vanadium-based catalyst, or a catalyst with zeolites in the washcoat.

Thermal durability is particularly important for automotive SCR applications with engine out temperatures of up to 600 °C for Diesel engines and even much higher temperatures for lean gasoline engines. The durability issue is further aggravated by the need for a soot filter/deposition device in order to treat exhaust gas from a diesel engine. As described above, exhaust gas temperatures may easily exceed 600 °C downstream of a filter/deposition device during its regeneration. The main problem with vanadium catalysts is that they are deactivated at temperatures above 600°C. One solution for this problem is the stabilization of vanadium catalysts. Another solution for this problem are zeolites, which offer improved durability at high temperatures, including the ability to withstand extended operation above 650 °C and brief exposure to temperatures of 750 to 850 °C. Zeolite catalysts combined with an upstream oxidation catalyst also have a smaller overall volume than vanadium catalysts. New Fe- and Cu-exchanged zeolites have been developed for the SCR process with approximately equal performance to that of vanadium catalysts, if the fraction of the NO₂ is 20% to 50% of the total NOₓ. The reliance on an increased fraction of NO₂ within the total NOₓ to increase low temperature (sub-350 °C) performance of zeolite catalysts typically requires the use of an upstream oxidation catalyst for NO to NO₂.

For applications that have consistent low-temperature exhaust and applications that use higher sulfur fuels and where space is a less critical concern (power plants and some large ships burning bunker fuel oils as part of their propulsion systems), vanadium catalysts are generally preferred. Vanadium catalysts are much more common than zeolites for controlling NOₓ emissions from stationary power plants with the sole exception of power plants that use high-temperature gas turbines.

Soot deposition and SCR catalytic converters may be combined. The usual order is to combine a filter/deposition device upstream of the SCR catalytic converter, whereby the urea solution is injected in front of the SCR catalytic converter. But also the opposite order of SCR system and filter/deposition device is known. Most of these systems involve also an oxidation catalyst upstream of the soot filter/deposition device in order to use the NO₂ produced in the oxidation catalyst for the soot oxidation or for the "fast-SCR" reaction in the SCR catalytic converter. It is obvious that the combination of oxidation catalyst, SCR catalytic converter and particulate filter/deposition device results in a large volume and weight of the exhaust gas after-treatment system, which should be reduced. One possibility to achieve such a volume reduction is to coat the filter/deposition device with a catalyst, active for SCR. However, the release of heat during filter/deposition device regeneration poses a high thermal stress for the SCR catalyst coating, which is detrimental to its durability.

It is therefore the aim of the present invention to provide a method and a system for the treatment of a NOₓ- and soot-containing exhaust gas stemming from an internal combustion engine that combines soot filtration/deposition and selective catalytic reduction of NOₓ in a new way to foster the overall system efficiency and to reduce system size and weight.

With respect to the method this aim is achieved according to the invention by a method for a treatment of a NOₓ- and soot-containing exhaust gas stemming from an internal combustion engine; comprising the steps of:
a) providing NO₂ in the NOₓ- and soot-containing exhaust gas by engine-internal measures and/or by bringing at least a part of the NOₓ- and soot-containing exhaust gas into contact with an oxidation catalyst;
b) injecting at least into a part of the NOₓ- and soot-containing exhaust gas a predetermined amount of ammonia, either as neat ammonia or as a precursor compound for ammonia, such as urea, a liquid solution of urea, ammonium carbamate, isocyanic acid, cyanuric acid, methanamide, etc. or combinations of them, downstream or parallel to the controlling of the amount of the NO₂ as seen in the flow direction of the NOₓ- and soot-containing exhaust gas;
c) bringing the ammonia-enriched NOₓ- and soot-containing exhaust gas into contact with a filter/deposition device and thereby accumulating soot particles from the NOₓ- and soot-containing exhaust gas on its surface thereby initiating a selective catalytic reduction of at least a part of the NOₓ-molecules with ammonia to nitrogen and water.

It has to be noted that providing a NOₓ- and soot-containing exhaust gas with NO₂/NOₓ>0 is essential for the success of the NOₓ reduction reaction that takes place on the soot layer disposed on the filter/deposition device. Is has to be emphasized that the NO₂ in the exhaust gas causes the observed NOₓ reduction effect and that any NO₂ fraction >0 shows the above desribed effect. On the basis of the present data it cannot be excluded that also some NO is consumed in the NOₓ reduction reaction along with NO₂, i.e. the actual reaction mechanism is unclear. At least, it can be stated that the consumption of NH₃ and NOₓ changes from about 4:3 for NO₂/NOₓ = 100 %, according to the stoichiometry of the "NO₂-SCR" reaction, to about 1:1 for NO₂/NOₓ = 50 %, according to the stoichiometry of the "fast-SCR" reaction. Irrespective of the actual reaction mechanism, the described effect can be favorably exploited.

With respect to the system this aim is achieved according to the invention by an exhaust gas after-treatment system for the treatment of a NOₓ- and soot-containing exhaust gas stemming from an internal combustion engine and being conductable in an exhaust line; comprising:
a) means to provide NO₂ in the NOₓ- and soot-containing exhaust gas; said means are engine-internal measures and/or bringing at least a part of the NOₓ- and soot-containing exhaust gas into contact with an oxidation catalyst; the NO₂/NOₓ ratio might be either uncontrolled or controlled;
b) an injecting module being designed to inject at least into a part of the NOₓ- and soot-containing exhaust gas a predetermined amount of ammonia, either as neat ammonia or as a precursor compound for ammonia, such as urea, a liquid solution of urea, ammonium carbamate, isocyanic acid, cyanuric acid, methanamide, etc. or combinations of them, and being disposed downstream or parallel to the oxidation catalyst as seen in the flow direction of the NOₓ- and soot-containing exhaust gas; and
c) a device for filtering/depositing soot, i.e. carbon particles, from the NOₓ- and soot-containing exhaust gas being designed to contact the soot, i.e. the carbon particles, with the ammonia-enriched NOₓ- and soot-containing exhaust gas thereby initiating a selective catalytic reduction of at least a part of the NOₓ-molecules with the ammonia to nitrogen and water.

Again, it should be pointed out that the oxidation catalyst may be omitted if engine-internal measures are applied to increase the NO₂ fraction of the NOₓ, emitted from the engine, or if a lower system efficiency is acceptable.

Therefore, this method and this system allow to initiate the SCR reaction already on the soot particles accumulated on the filter/deposition device. It has to be pointed out that the filter/deposition device is originally designed to filter/deposit soot particles. In other words, the support structure may not comprise any additional coating or layer relevant in a way that this layer or coating may initiate the SCR reaction. Poisoning of the soot layer is not an issue as compared to the poisoning of an SCR catalyst since the diesel exhaust gas delivers continuously new soot particles to cake the surfaces of the support structure with soot particles which is deliberately intented in order to build a layer of soot particles on the support structure. Therefore, the harmful NOₓ molecules have a high probability of being simultaneously present with a molecule of the reducing agent within or at the top of the layer of filtered/deposited soot particles thereby being reduced to H₂O and N₂.

Although a negative effect is known in the prior art for the soot particles which usually disturb chemical deposition and reaction processes in exhaust gases, it is the outstanding finding according to the invention that even a continuous influx of soot particles is not detrimental to the NOₓ reduction reaction but in contrast fosters this NOₓ reduction reaction on the soot particles. It has to be emphasized that the wording "Ammonia enriched NOₓ- and soot-containing exhaust gas" means both a gas mixture already containing ammonia and a gas mixture containing a precursor compound of ammonia, such as urea.

It is clear that the described system may still be combined with an additional SCR catalytic converter, downstream of the soot filter/deposition device. But, since now already the layer of soot particles filtered from the exhaust gas converts a perceptible amount of the NOₓ and the reducing agent to nitrogen, i.e. the NOₓ reduction reaction takes place on the soot layer, the volume of the actual SCR catalytic converter downstream of the support structure can be more compact and/or the properties of the SCR catalytic converter can be optimized for finishing the SCR reaction without the harmful risk of an ammonia slip.

Since the NO₂ in the exhaust gas causes the observed NOₓ reduction effect, any concentration of NO₂ is able to initiate the above described SCR effect, i.e. the reaction of NOₓ with ammonia or the reducing agent on the soot layer to nitrogen. It is self-evident that higher NO₂/NOₓ ratios results in higher NOₓ reduction efficiencies. In a variant of the present invention, using an uncontrolled oxidation catalyst for providing the NO₂ in the NOₓ- and soot-containing exhaust gas, fluctuating NO₂/NOₓ ratios are found downstream of the oxidation catalyst in dependency of exhaust gas temperature, the amount of NOₓ emitted by the engine, the engine out NO₂/NO ratio, etc., and this results in varying NOₓ reduction efficiencies of the system. Therefore, one may wish to control the the NO₂/NOₓ ratio, e.g. to a value of 50%, which has the advantage of offering a high NOₓ reduction efficiency and a almost 1:1 ratio for the consumption of NH₃ and NOₓ over a broad range of engine operating conditions. As for an example, this equilibrium can be established by controlling the amount of the exhaust gas that is passed through the oxidation catalyst being disposed upstream or in parallel to the injection module and upstream to the soot filter/deposit device.

The providing of the amount of NO₂ in the NOₓ- and soot-containing exhaust gas is done in a way that the amount of NO₂ is increased as compared to the amount of NO₂ if no controlling is performed. That means in other words that the internal combustion measure may include a way to change the air/fuel ratio and/or to add at least temporarily an additive to the fuel and/or to amend the compression or other combustion properties of the engine and/or the measures involving a turbo charger, such as changing the temperature and/or pressure and/or amount of the recharged exhaust gas; all measures established in order to increase the NO₂ content in the exhaust gas.

Another preferred embodiment of the present invention can be achieved when the amount of dosed ammonia or dosed reducing agent is controlled such that only very few ammonia or reducing agent leaves the exhaust gas after-treatment system unreacted. An ammonia concentration of around 10 ppm has established during the last years to be an acceptable emission level for exhaust gas after-treatment systems.

Preferred reaction conditions for the SCR reaction can be established when the GHSV in the support structure ranges from 2000 h⁻¹ to 100.000 h⁻¹, preferably from 10.000 h⁻¹ to 50.000 h⁻¹ and/or when the temperature of the ammonia-enriched NOₓ- and soot-containing exhaust gas is controlled to be at least during step c) in a range from 150°C to 500°C, preferably in the range from 200°C to 350°C.

A further preferred embodiment of the present invention is to design the surface of the filter/deposition device in a way that a layer of soot particles is formed out of the NOₓ- and soot-containing exhaust gas. This has to be emphasized against those structures that are merely dedicated to increase the gas mixing within the exhaust gas, in particular downstream of the injection of the reducing agent. Therefore, it is appropriate to design the filter/support structure in a way that a wall flow material, a wire mesh, a gauze, a fleece or foam, either made of metal or ceramics, is provided using the particle deposition mechanisms filtration, impaction, interception, diffusion or combinations of them. When filtration is the dominant particle deposition mechanism the pores of the filter are smaller than the averagy size of the soot particles. However, the deposition mechanisms impaction, interception and diffusion allow to design deposition devives, in which the mean porosity of the support structure can be a lower multiple of the mean size of the soot particles in order to avoid a complete clogging of the flow pathways within the support structure but also allows to generate a layer of soot particles that is sufficient in its thickness to serve as a hotbed for the NOₓ reduction reaction.

Preferred examples of the present invention are described hereinafter in detail refering to the following drawings which depict in:
- Figure 1: a schematic overview on a first exhaust gas line of a diesel engine; and
- Figure 2: a schematic overview on a second exhaust gas line of the diesel engine of Fig. 1.

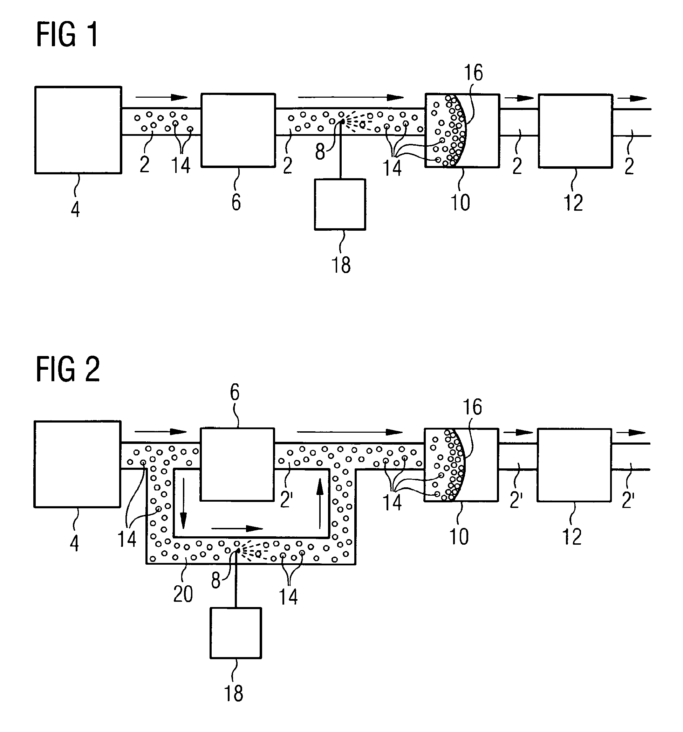

Figure 1 shows a schematic overview on a first exhaust gas line 2 of a diesel engine 4. As seen in the flow direction of the exhaust gas an oxidation catalyst 6, an injecting module 8, a soot filter/deposition device 10 and an SCR catalytic converter 12. For the sake of simplicity of the illustration, sensors for measuring the chemical composition of the exhaust gas and exhaust gas flow meter are not shown in detail, but are available to measure the amount of NO₂ as compared to all remaining other NOₓ-compounds and to determine the amount of urea to be injected from an urea storage tank 18 into the exhaust gas flow. In the soot filter/deposition device,10 soot particles 14 are filtered/deposited from the exhaust gas and form a layer of soot particles on the surfaces of a filter/support structure 16. In this layer, the NOₓ-content in the exhaust gas is brought into contact with the ammonia thereby executing the NOₓ reduction reaction.

Figure 2 shows schematically a similar arrangement as in Figure 1. A second exhaust gas line 2' is similar to the previous one, but having a bypass line 20. Although not illustrated, the cross section of the bypass line 20 may be designed in a way that the amount of exhaust gas bypassing the oxidation catalyst 6 can be controlled. Also the part of this bifurcation leading to the oxidation catalyst can be closed completely in the sense that none of the exhaust gas is passed via the oxidation catalyst 6. Injection of the reducing agent occurs in this example in the bypass line 20 to which the injecting module 8 is assigned to. By controlling the volume of the exhaust gas passing through the oxidation catalystor 6 and throught the bypass line, it is one way realized in order to control the amount of NO₂ in the exhaust gas to the desired extent. The oxidation catalyst 6 may be omitted if internal combustion measures are taken to produce NO₂ or if a lower NOₓ reduction efficiency is acceptable.

A detailed analysis on the gas contents and the reaction levels has been reached from an scientific investigation on a laboratory scale. For theses measurements stripes of a metal fibre mat (ca. 2 cm x 10 cm), each comprising about 70 mg of soot particles deposited on the surface of the mat, had been alternately coiled with corrugated foil (400 cpsi) and introduced into a quarz reactor having a cross section of about 20 mm x 15 mm. A model gas had been synthesized comprising nitrogen, 5% water, 0 or 10% oxygen, 0 or 200 ppm NO₂ and 0, 100, 200 or 400 ppm ammonia. Temperatures were kept at 200, 250, 300 and 350°C.

When only dosing NO without NH₃ a reduction of the NOₓ had not been observed. Also when dosing NO and NH₃ a reduction of the NOₓ had not been observed. The same results was obtained when only dosing NO₂ without NH₃. On the contrary when simultaneously dosing NO₂ and NH₃, the NOₓ reduction reaction took place to a significant extent. The table below shows the results on the NOₓ-reduction under ammonia dosing during the oxidation of the carbon particles.

**Table 1: NOₓ-Reduction with NH₃ during soot oxidation**

| T | NO₂ in | NH₃ in | NO | NO₂ | NOₓ | N₂O | HNO₃ | NH₃ | DeNOx |
|---|---|---|---|---|---|---|---|---|---|
| [°C] | [ppm] | [ppm] | [ppm] | [ppm] | [ppm] | [ppm] | [ppm] | [ppm] | [%] |
| 200 | 200 | 0 | 18 | 182 | 200 | 0.1 | 0.3 | 0 | 0 |
| **200** | **200** | **200** | **13** | **176** | **189** | **0.8** | **1.1** | **192** | **6** |
| 250 | 200 | 0 | 37 | 163 | 200 | 0.1 | 0.1 | 0 | 0 |
| **250** | **200** | **200** | **25** | **161** | **186** | **0.8** | **0.8** | **184** | **7** |
| 300 | 200 | 0 | 77 | 120 | 198 | 0.0 | 0.1 | 0 | 1 |
| 300 | 200 | 100 | 57 | 128 | 185 | 0.4 | 0.5 | 83 | 7 |
| **300** | **200** | **200** | **55** | **127** | **183** | **0.7** | **1.0** | **179** | **9** |
| 300 | 200 | 400 | 53 | 126 | 179 | 1.0 | 1.4 | 378 | 10 |
| 350 | 200 | 0 | 93 | 105 | 198 | 0.2 | 0.2 | 1 | 1 |
| **350** | **200** | **200** | **81** | **105** | **185** | **1.7** | **1.1** | **175** | **7** |
| 350 | 200 | 400 | 80 | 100 | 181 | 2.5 | 1.5 | 367 | 10 |

The second and third column refer to the input of NO₂ and NH₃ resp. The forth to ninth column lists the gas content after the gas passing the mat. Column ten lists the achieved NOₓ reduction efficiency (DeNOx). Within the tolerances of the measurement and dosing accuracy of about 1%, no NOₓ reduction based on SCR occurs while ammonia is absent. With the presence of 200 ppm NH₃ over the complete temperature range of 200 to 350°C NOₓ reduction rates in the range from 6 to 10% have been observed. The results indicated a strong tendency for good SCR efficiency when the concentration of NO₂ and NH₃ ranges around the equilibrium. A doubled amount of ammonia in fact shows a higher DeNOₓ-rate but the generation of N₂O and HNO₃ can not contribute to the SCR reaction but can be considered as side-reactions that ranges between 5 and 10% as compared to the reduction of about 12 to 20 ppm NOₓ. It has been therefore proven that the soot layer inheres a catalytic activity strong enough to initiate the NOₓ reduction reaction that - as known so far - under these circumstances takes only place in the dedicated SCR catalytic converter.

Further results have been achieved with larger concentration of soot which are even more representative for the exhaust gas stemming from Diesel engines.

### Example 1

Soot concentration: 8.3 g Soot/Liter, Dosing: 35 m³/h, Model gas: Nitrogen comprising 5 % water, 10 % O₂, 200 ppm NO₂, 200 ppm NO, 400 ppm NH₃. T = 300 °C. GHSV = 60'000 h⁻¹.
DeNOx measured: 32%

### Example 2

Soot concentration: 8.3 g Soot/Liter, Dosing: 35 m³/h, Model gas: Nitrogen comprising 5 % water, 10 % O₂, 200 ppm NO₂, 200 ppm NO, 200 ppm NH₃. T = 300 °C. GHSV = 60'000 h⁻¹.
DeNOx measured: 20%

### Example 3

Soot concentration: 5.0 g Soot/liter, Dosing: 35 m³/h, Model gas: Nitrogen comprising 5 % water, 10 % O₂, 200 ppm NO₂, 200 ppm NO, 400 ppm NH₃. T = 300 °C. GHSV = 60'000 h⁻¹.
DeNOx measured: 23%

### Example 4

Soot concentration: 8.3 g Soot/liter, Dosing: 35 m³/h, Model gas: Nitrogen comprising 5 % water, 10 % O₂, 200 ppm NO₂, 200 ppm NH₃. T = 300°C. GHSV = 60'000 h⁻¹.
DeNOx-rate measured: 20%

These results confirm that the presence of NO₂ is a condition for the NOₓ reduction reaction to take place over the soot or carbon particles.

It is clearly seen from the results that NH₃ should be preferentially present in excess relative to the NH₃ amount, which is consumed in the SCR reaction over the soot or carbon particles, in order to achieve maximum DeNOx values. However, this can only be realized in a system, where the NH₃ excess is consumed downstream of the filter/deposition device, e.g. in an additional SCR catalytic converter.

The examples yield to the conclusion that the design allows high conversion rates. In particular for stationary applications the amount of soot particles can be controlled to the extent that reduction rates close to 100% or at 100 % can be achieved.

Therefore, it has to be pointed out again that the DeNOx-reaction is executed in the layer of soot or carbon particles being retained by the support structure; in other words it is less the material or surface of the support structure contributing to the DeNOx-reaction but it is the layer of soot or carbon particles providing the hotbed for contacting the NOₓ molecules with the ammonia molecules that causes the NOₓ reduction.

## Claims

1. A method for a treatment of a NOₓ- and soot-containing exhaust gas stemming from an internal combustion engine (4); comprising the steps of:
a) providing NO₂ in the NOₓ- and soot-containing exhaust gas by an internal combustion measure and/or by bringing at least a part of the NOₓ- and soot-containing exhaust gas into contact with an oxidation catalyst (6);
b) injecting at least into a part of the NOₓ- and soot-containing exhaust gas a predetermined amount of ammonia, either as neat ammonia or as a precursor compound for ammonia, such as urea, a liquid solution of urea, ammonium carbamate, isocyanic acid, cyanuric acid, methanamide, etc. or combinations of them, downstream and/or parallel to the NO₂ production as seen in the flow direction of the NOₓ- and soot-containing exhaust gas;
c) bringing the ammonia-enriched NOₓ- and soot-containing exhaust gas into contact with a filter/support structure (16) filtering/depositing soot particles (14) from the NOₓ- and soot-containing exhaust gas on its surface thereby initiating a selective catalytic reduction of at least a part of the NOₓ molecules with ammonia to nitrogen and water.

2. The method according to claim 1, in which the amount of NO₂ in the NOₓ- and soot-containing exhaust gas is controlled in a way that the NO₂/NOₓ fraction is elevated at operating conditions, where lower amounts of NO₂ are found if no controlling is performed.

3. The method according to claim 2, in which the NO₂ fraction within the NOₓ- and soot-containing exhaust gas is elevated in a way that the amount of exhaust gas bypassing the oxidation catalyst 6 can be controlled.

4. The method according to claim 2, in which the NO₂ fraction within the NOₓ- and soot-containing exhaust gas is elevated by engine-internal measures.

5. The method according to claim 1 to 3, wherein an additional SCR catalytic converter is mounted downstream of the support structure (16).

6. The method according to claim 1 to 4, wherein the amount of dosed ammonia or dosed reducing agent is controlled such that only a minimum amount of ammonia or reducing agent leaves the exhaust gas after-treatment system unreacted.

7. The method according to any of the preceding claims, wherein the GHSV in the support structure ranges from 2000h⁻¹ to 100.000 h⁻¹, preferably from 10.000 h⁻¹ to 50.000 h⁻¹.

8. The method according to any of the preceding claims, wherein the temperature of the ammonia-enriched NOₓ- and soot-containing exhaust gas is controlled to be at least during step c) in a range from 150°C to 500°C, preferably in the range from 200°C to 350°C.

9. The method according to any of the preceding claims, wherein the surface of the support structure is designed to form a layer of soot particles filtered/deposited out of the NOₓ- and soot-containing exhaust gas.

10. The method according to claim 9, wherein the filter/support structure is designed in a way that it provides a wall flow material, a wire mesh, a gauze, a fleece or foam, either made of metal or ceramics, using the particle deposition mechanisms filtration, impaction, interception, diffusion or combinations of them.

11. An exhaust gas after-treatment system for the treatment of a NOₓ- and soot-containing exhaust gas stemming from an internal combustion engine (4) and being conductable in an exhaust line (2, 2'); comprising:
a)means to provide NO₂ in the NOₓ- and soot-containing exhaust gas; said means are engine-internal measures and/or bringing at least a part of the NOₓ-containing exhaust gas into contact with an oxidation catalyst (6); the NO₂/NOₓ ratio might be either uncontrolled or controlled;
b) an injecting module being designed to inject at least into a part of the NOₓ- and soot-containing exhaust gas a predetermined amount of ammonia, either as neat ammonia or as a precursor compound for ammonia, such as urea, a liquid solution of urea, ammonium carbamate, isocyanic acid, cyanuric acid, methanamide, etc. or combinations of them, and being disposed downstream (Fig. 1) and/or parallel (Fig. 2) to the oxidation catalyst (6) as seen in the flow direction of the NOₓ- and soot-containing exhaust gas; and
c) a support structure (16) filtering/depositing carbon particles (14) from the NOₓ- and soot-containing exhaust gas being designed to contact the soot or carbon particles (14) with the ammonia-enriched NOₓ- and soot-containing exhaust gas thereby initiating a selective catalytic reduction of at least a part of the NOₓ-molecules with the ammonia to nitrogen and water.

12. The system according to claim 10, wherein the amount of NO₂ in the NOₓ- and soot-containing exhaust gas is controlled in a way that the NO₂/NOₓ fraction is elevated at operating conditions, where lower amounts of NO₂ are found if no controlling is performed.

13. The system according to claim 11 or 12, wherein the NO₂ fraction within the NOₓ- and soot-containing exhaust gas is elevated in a way that the amount of exhaust gas bypassing the oxidation catalyst (6) can be controlled.

14. The system according to claim 11 or 12, wherin the NO₂ fraction of NOₓ- and soot-containing exhaust gas is elevated by internal measures at the engine.

15. The system according to claim 11 to 14, wherein an additional SCR catalytic converter is mounted downstream of the support structure (16).

16. The system according to claim 11 to 15, wherein the amount of dosed ammonia or dosed reducing agent is controlled such that only a minimum amount of ammonia or reducing agent leaves the exhaust gas after-treatment system unreacted.

17. The system according to any of the preceding claims 11 to 16, wherein the GHSV in the support structure ranges from 2000h⁻¹ to 100.000 h⁻¹, preferably from 10.000 h⁻¹ to 50.000 h⁻¹.

18. The system according to any of the preceding claims 11 to 17, wherein the temperature of the ammonia-enriched NOₓ- and soot-containing exhaust gas is controlled to be at least in the area of the support structure in a range from 150°C to 500°C, preferably in the range from 200°C to 350°C.

19. The method according to any of the preceding claims 11 to 18, wherein the surface of the filter/support structure is designed to form a layer of soot particles out of the NOₓ- and soot-containing exhaust gas.

20. The method according to claim 19, wherein the filter/support structure is designed in a way that it provides a wall flow material, a wire mesh, a gauze, a fleece or foam, either made of metal or ceramics, using the particle deposition mechanisms filtration, impaction, interception, diffusion or combinations of them.
